# EUROPEAN PATENT APPLICATION

(11) **EP 3 779 248 A1**
(43) Date of publication of application: **17.02.2021**
(21) Application number: 19781490.8
(22) Date of filing: 29.03.2019
(51) Int. Cl.: F16J 15/40, F16F 15/12, F16F 15/126, F16H 55/36, F16J 15/3204

(54) **AIR FLOW GENERATION STRUCTURAL BODY AND SEALING STRUCTURE**

(30) Priority: 02.04.2018 JP 2018070843
(71) Applicant: NOK Corporation, Minato-ku Tokyo 105-8585 (JP)
(72) Inventor: OYAMA Takayuki, Tsujido-shinmachi, Fujisawa-shi, Kanagawa 251- 0042 (JP); TOMA Shota, Tsujido-shinmachi, Fujisawa-shi, Kanagawa 251- 0042 (JP)
(74) Representative: Global IP Europe Patentanwaltskanzlei
(86) International application number: PCT/JP2019/013967
(87) International publication number: WO 2019/194088

(57) **Abstract**

Provided are an air flow generation structural body and a sealing structure that can inhibit ingress of dust even further. An air flow generation structural body includes a main body (61) disposed in a gap between an attachment target (53) to which a sealing device (20) is attached and a disc-shaped member (11) that is integrated with a shaft member (14) so as to extend from the shaft member (14) toward an outer periphery side. The shaft member (14) passes through a through-hole (53h) in the attachment target (53) and is rotatable around an axis. The main body (61) is attached to the shaft member (14) so as to be rotatable together with the shaft member (14). The air flow generation structural body further includes a plurality of blade portions (62) formed on an outer peripheral surface (61)g of the main body (61) to generate an air current. Each of the blade portions (62) extends along a centrifugal direction perpendicular to the axis x and is parallel to the axis x.

## Description

### Technical Field

The present invention relates to an air flow generation structural body and a sealing structure and is applied, for example, to a sealing structure that is made up of a torsional damper used to absorb torsional vibration produced at a rotating shaft of an engine in a vehicle or the like and an oil seal for the torsional damper.

### Background Art

In an engine of a vehicle, a torsional damper is attached to an end of a crankshaft to reduce torsional vibration produced by a change in rotation of the crankshaft, for example. Generally, in the engine of the vehicle, the torsional damper is used as a damper pulley to transmit part of motive power from the engine to a water pump, an air conditioning compressor, and other auxiliaries through a belt for power transmission. The crankshaft is inserted into a through-hole in a front cover, for example, and a space between the torsional damper and the through-hole is sealed with an oil seal.

Conventional torsional dampers for use in engines of vehicles employ a noncontact labyrinth sealing structure that combines an annular protrusion on a hub of a torsional damper and an annular protrusion on a front cover for an engine in order to improve dust resistance to foreign matter such as muddy water, sand and dust without a rise in torque.

A torsional damper having such a structure is integrated with a plurality of fins that is disposed at a place facing an annular protrusion on a front cover and that is slanted at a predetermined angle relative to an axis. Such a torsional damper is proposed (For example, see Patent Literature 1).

A current of air generated by the plurality of the fins when the torsional damper having such a configuration rotates together with the crankshaft flows between the annular protrusion on the hub and the annular protrusion on the front cover from an inner periphery side to an outer periphery side. This inhibits ingress of dust.

### Document List

### Patent Literature

Patent Literature 1: Japanese Patent Application Publication No. 2017-214994

### Summary of Invention

### Technical Problem

Unfortunately, the torsional damper of Patent Literature 1 is unsatisfactory in terms of inhibiting ingress of dust because of a low velocity of the current of air generated by the plurality of the fins.

In view of the problem described above, it is an object of the present invention to provide an air flow generation structural body and a sealing structure that are able to inhibit ingress of dust even further.

### Solution to Problem

An air flow generation structural body according to the present invention, accomplished to attain the object described above, includes: a main body disposed in a gap between an attachment target to which a sealing device is attached and a disc-shaped member that is integrated with a shaft member in such a way as to extend from the shaft member toward an outer periphery side, the shaft member passing through a through-hole in the attachment target and being rotatable around an axis, the main body being attached to the shaft member in such a way as to be rotatable together with the shaft member; and a plurality of blade portions formed on an outer peripheral surface of the main body to generate an air current, at least part of each of the blade portions extending along a centrifugal direction perpendicular to the axis and being parallel to the axis.

According to the present invention, it is preferable that the blade portions each have a length in such a way as to reach an end of the disc-shaped member on the outer periphery side.

According to the present invention, it is preferable that the blade portions each have a length in such a way as to reach a place that faces a through-hole of a window formed in the disc-shaped member.

Preferably, the air flow generation structural body according to the present invention includes a recessed part that is annular in shape and that is formed in a sealing-side surface facing the attachment target, wherein a side lip of the sealing device extends to the recessed part such that an annular space is formed between the side lip and an outer peripheral surface of the air flow generation structural body forming the recessed part.

A sealing structure according to the present invention includes: a sealing device; an attachment target to which the sealing device is attached; a shaft member passing through a through-hole in the attachment target and being rotatable around an axis; a disc-shaped member integrated with the shaft member in such a way as to extend from the shaft member toward an outer periphery side; and an air flow generation structural body including: a main body in a gap between the attachment target and the disc-shaped member, the main body being attached to the shaft member in such a way as to be rotatable together with the shaft member and being attached to the shaft member in such a way as to be rotatable together with the shaft member; and a plurality of blade portions formed on an outer peripheral surface of the main body to generate an air current, at least part of each of the blade portions extending along a centrifugal direction perpendicular to the axis and being parallel to the axis, wherein the air flow generation structural body generates an air current flowing in the centrifugal direction perpendicular to the axis in response to rotation of the shaft member.

### Effects of Invention

The present invention can achieve an air flow generation structural body and a sealing structure that are able to inhibit ingress of dust even further.

### Brief Description of Drawings

[Figs. 1A and 1B] A sectional view and a plan view each illustrating a general configuration of a damper pulley according to a first embodiment of the present invention. Fig. 1A is a sectional view taken along line Z-Z of Fig. 1B.
[Fig. 2] A partial sectional view taken along an axis, illustrating a schematic configuration of a sealing structure including the damper pulley and an oil seal according to the first embodiment of the present invention
[Figs. 3A and 3B] A perspective view and a sectional view each illustrating a schematic structure of a fin structure to be attached to the damper pulley according to the first embodiment
[Figs. 4A and 4B] A perspective view and a sectional view each illustrating a schematic configuration of a fin structure according to a second embodiment
[Figs. 5A and 5B] A perspective view and a sectional view each illustrating a schematic configuration of a fin structure according to a third embodiment
[Figs. 6A and 6B] A perspective view and a sectional view each illustrating a schematic configuration of a fin structure according to a fourth embodiment
[Fig. 7] A graph illustrating results of performance evaluation of the fin structures according to the first to the fourth embodiments of the present invention

### Description of Embodiments

Hereinafter, embodiments of the present invention will be described with reference to the drawings.

### <First embodiment

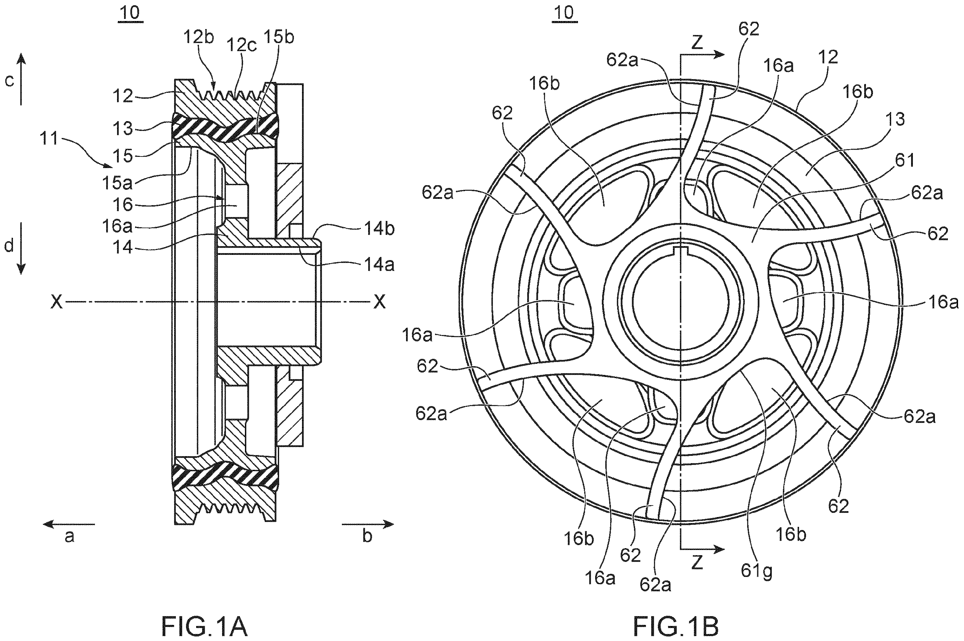

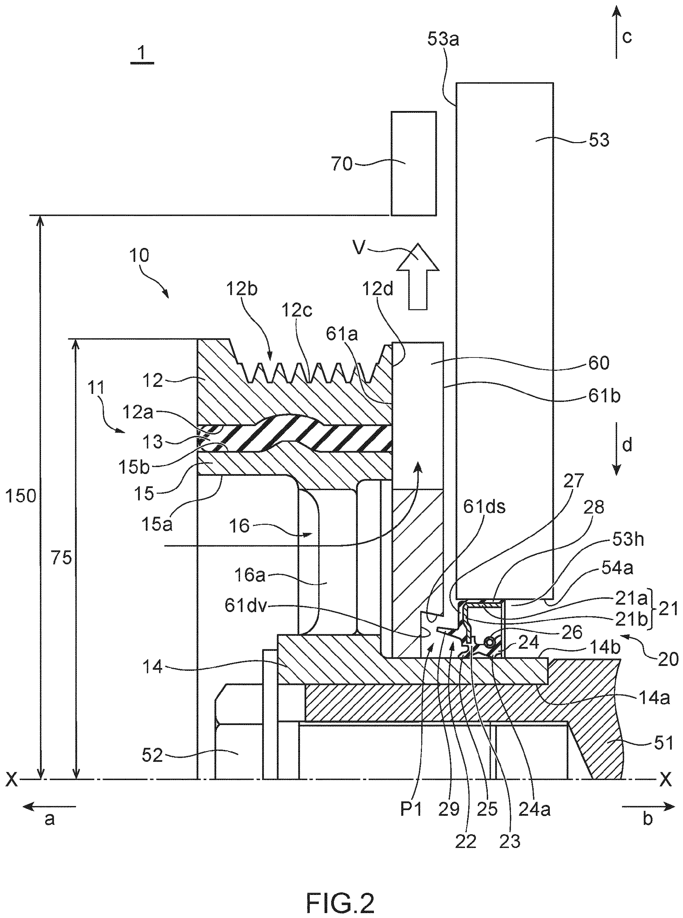

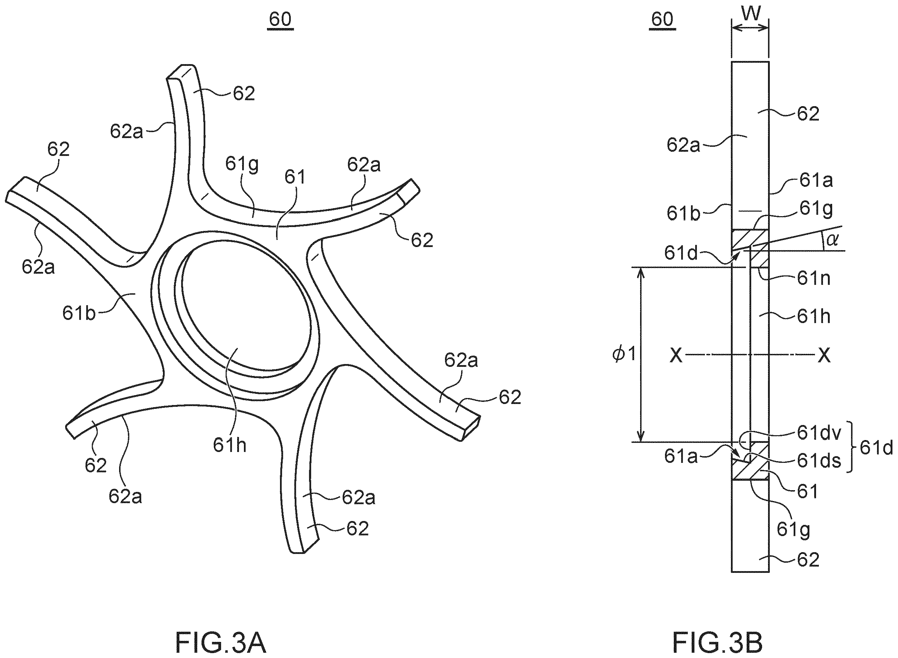

Figs. 1A and 1B are a sectional view and a plan view each illustrating a general configuration of a damper pulley according to a first embodiment of the present invention. Fig. 2 is a partial sectional view taken along an axis, illustrating a schematic configuration of a sealing structure including the damper pulley and an oil seal according to the first embodiment of the present invention. Figs. 3A and 3B is a perspective view and a sectional view each illustrating a schematic structure of a fin structure to be attached to the damper pulley according to the first embodiment. The sealing structure including a torsional damper and the oil seal according to the first embodiment of the present invention is, for example, applied to an engine in an automobile.

Hereinafter, in Fig. 2, for the convenience of description, an arrow a direction (see Figs. 1A and 1B) along a direction of an axis x represents an air side, and an arrow b direction (see Figs. 1A and 1B) along the axis x direction represents an oil side. More specifically, the air side is a direction in which to move away from an engine, and the oil side is a direction in which to move closer to the engine. In a direction perpendicular to the axis x (hereinafter also referred to as a "radial direction"), a direction in which to move away from the axis x (an arrow c direction in Figs. 1A and 1B) represents an outer periphery side, whereas a direction in which to move closer to the axis x (an arrow d direction in Figs. 1A and 1B) represents an inner periphery side.

A damper pulley 10 that acts as a torsional damper according to the first embodiment of the present invention shown in Figs. 1A and 1B are fixed to one end of a crankshaft 51 of an engine (not shown) with a bolt 52 as shown in Fig. 2.

The damper pulley 10 includes a hub 11 as a disc-shaped member, a pulley 12 as a mass body, and a damper elastic body 13 disposed between the hub 11 and the pulley 12. The hub 11 is an annular member centered about the axis x and includes a boss 14 on the inner periphery side, a rim 15 on the outer periphery side, and a disc 16 having a substantially disc shape and connecting the boss 14 and the rim 15 together. The hub 11 is made of a metallic material through a process such as casting, for example.

The boss 14 of the hub 11 is an annular part having a through-hole 14a and being centered about the axis x. The disc 16 extends from an outer peripheral surface of an outside (arrow a direction-side) portion of the boss toward the outer periphery side (in the arrow c direction). The boss 14 has an outer peripheral surface 14b that is a surface of an inside (arrow b direction-side) portion of the cylindrical boss on the outer periphery side. The outer peripheral surface 14b of the boss 14 is a smooth surface that serves, as described later, as a sealing surface on which an oil seal 20 is put.

The rim 15 of the hub 11 is a cylindrical part centered about the axis x and is positioned concentrically at the outer periphery side (an arrow c direction side) with respect to the boss 14. The disc 16 extends from an inner peripheral surface 15a that is a surface of the rim 15 on the inner peripheral side (an arrow d direction side) toward the inner periphery side (in the arrow d direction). The damper elastic body 13 is press-fitted to an outer peripheral surface 15b that is a surface of the rim 15 on the outer periphery side.

The disc 16 connects the boss 14 and the rim 15 together by extending between the boss 14 and the rim 15. The disc 16, which extends in a direction perpendicular to the axis x, may extend in a direction slanted with respect to the axis x. A cross section of the disc 16 along the axis x may have a curved shape or a straight shape.

In the disc 16, at least one pair of a small window 16a and a large window 16b that are each made up of a through-hole passing through the disc 16 from the oil side (an arrow b direction side) to the air side (an arrow a direction side) is formed.

In this instance, four small windows 16a are formed concentrically with respect to the axis x at equal angular intervals (90-degree angular intervals in this case) in a circumference direction. Four large windows 16b are disposed between the respective small windows 16a and are formed concentrically with respect to the axis x at equal angular intervals (90-degree angular intervals in this case) in the circumference direction. The large windows 16b are disposed at places that are nearer to the outer periphery side than the small windows 16a are. The small windows 16a and the large windows 16b contribute to a reduction in weight of the hub 11, and by extension of the damper pulley 10.

The pulley 12 is an annular member centered about the axis x and has a shape so as to cover an outer periphery side of the hub 11. Specifically, an inner peripheral surface 12a that is a surface of the pulley 12 on the inner peripheral side (the arrow d direction side) has a shape corresponding to the outer peripheral surface 15b of the rim 15 of the hub 11. The pulley 12 is positioned such that the inner peripheral surface 12a is at a distance from and face-to-face with the outer peripheral surface 15b of the rim 15 in the radial direction (an arrows cd direction). In an outer peripheral surface 12b that is a surface of the pulley 12 on the outer peripheral side (the arrow c direction side), a plurality of annular v-shaped grooves 12c is formed. A timing belt (not shown) can be wound on the grooves.

The damper elastic body 13 is disposed between the pulley 12 and the rim 15. The damper elastic body 13 is damper rubber that is made of a gummy elastic material excellent in thermal resistance, cold resistance, and fatigue strength by vulcanization (cross-linking). The damper elastic body 13 is press-fitted between the pulley 12 and the rim 15 and is fitted on and fixed to the inner peripheral surface 12a of the pulley 12 and the outer peripheral surface 15b of the rim 15.

In the damper pulley 10, the pulley 12 and the damper elastic body 13 make up a damper portion that is tuned such that a torsional natural frequency of the damper portion matches a torsional natural frequency of the crankshaft 51, a predetermined frequency range set for a maximum torsion angle of the crankshaft 51. In other words, inertial mass of the pulley 12 in a circumferential direction and a shear spring constant of the damper elastic body 13 in a torsional direction are adjusted such that the torsional natural frequency of the damper portion matches the torsional natural frequency of the crankshaft 51.

As described above, in the engine, the damper pulley 10 is attached to the one end of the crankshaft 51. Specifically, the one end of the crankshaft 51 is inserted into the through-hole 14a in the boss 14 of the hub 11. The bolt 52 is screwed into the crankshaft 51 from the air side (the arrow a direction side) and the damper pulley 10 is thereby fixed to the crankshaft 51. A key such as a woodruff key is disposed between the crankshaft 51 and the boss 14 to engage with the crankshaft 51 and the boss 14. This prevents the damper pulley 10 from rotating relative to the crankshaft 51.

With the damper pulley 10 attached to the crankshaft 51, a portion of the outer peripheral surface 14b of the boss 14 adjacent to the oil side (the arrow b direction side) is inserted into a through-hole 53h in a housing 53 such that an annular space is formed between the outer peripheral surface 14b of the boss 14 and the housing 53. The oil seal 20 is put in the annular space.

The oil seal 20 includes an annular reinforcing ring 21 that is made of a metal material and centered about the axis x and an elastic body part 22 that is made up of an annular elastic body centered about the axis x. The elastic body part 22 is attached to and integrated with the reinforcing ring 21. The metal material for the reinforcing ring 21 is, for example, stainless steel or SPCC (a cold rolled steel sheet). The elastic body of the elastic body part 22 is, for example, a rubber material of every kind. Examples of the rubber material of every kind include synthetic rubber substances such as nitrile rubber (NBR), hydrogenated nitrile butadiene rubber (H-NBR), acrylic rubber (ACM), and fluororubber (FKM).

The reinforcing ring 21 has a substantially L-shaped cross section, for example, and includes a disc 21a and a cylindrical portion 21b. The disc 21a is a disc-shaped part having a hollow middle and extending in a direction substantially perpendicular to the axis x. The cylindrical portion 21b is a cylindrical part extending from an end portion of the disc 21a on the outer periphery side (the arrow c direction side) inward (in the arrow b direction) along the axis x.

The elastic body part 22 is attached to the reinforcing ring 21 and is integrated with the reinforcing ring 21 in the first embodiment so as to cover the reinforcing ring 21 from both the air side (the arrow a direction side) and the outer peripheral side (the arrow c direction side). The elastic body part 22 includes a lip waist part 23, a seal lip 24, and a dust lip 25.

The lip waist part 23 is a part positioned near an end portion of the disc 21a of the reinforcing ring 21 on the inner peripheral side (the arrow d direction side). The seal lip 24 is a part extending from the lip waist part 23 inward (in the arrow b direction) and is disposed face-to-face with the cylindrical portion 21b of the reinforcing ring 21. The dust lip 25 is a part extending from the lip waist part 23 toward the axis x.

An end portion of the seal lip 24 on an internal side (the arrow b direction side) includes an annular lip end portion 24a that has a wedge shape protruding to the inner peripheral side (in the arrow d direction) in cross-sectional shape. The lip end portion 24a is, as described later, formed so as to be in close contact with the outer peripheral surface 14b of the boss 14 of the hub 11 and be slidable along the outer peripheral surface 14b and is installed so as to seal closely a space between the oil seal and the damper pulley 10. A garter spring 26 is fitted onto an outer periphery side (an arrow c direction side) of the seal lip 24 to press the seal lip 24 to the inner peripheral side (the arrow d direction side) in the radial direction (the arrows cd direction).

The dust lip 25 is a part extending from the lip waist part 23 obliquely to the air side (the arrow a direction) and the inner peripheral side (the arrow d direction). Ingress of foreign matter toward the lip end portion 24a is prevented by the dust lip 25 in a usage state.

The elastic body part 22 also includes an outer cover 27 and a gasket 28. The outer cover 27 covers the disc 21a of the reinforcing ring 21 from the air side (the arrow a direction side), and the gasket 28 covers the cylindrical portion 21b of the reinforcing ring 21 from the outer peripheral side (the arrow c direction side).

The oil seal 20 also includes a side lip 29 extending to an external side (in the arrow a direction). Specifically, the side lip 29, which extends to the air side (in the arrow a direction), is a part extending parallel to the axis x or obliquely relative to the axis x to the air side (the arrow a direction) and the outer periphery side (the arrow c direction).

As described above, the oil seal 20 seals closely a space formed between the through-hole 53h in the housing 53 and the outer peripheral surface 14b of the boss 14 of the damper pulley 10. Specifically, the oil seal 20 is press-fitted and installed into the through-hole 53h in the housing 53 such that the gasket 28 of the elastic body part 22 is compressed and is fluid-tightly put into contact with an inner peripheral surface 54a that is a surface of the housing 53 on the inner peripheral side (the arrow d direction side).

Accordingly, a space between the oil seal 20 and the through-hole 53h in the housing 53 is sealed off. The lip end portion 24a of the seal lip 24 is fluid-tightly put into contact with the outer peripheral surface 14b of the boss 14 of the hub 11, and the space between the oil seal 20 and the damper pulley 10 is sealed off. In this way, a sealing structure 1 according to the first embodiment includes the damper pulley 10, which acts as a torsional damper, and the oil seal 20.

Further, in the sealing structure 1, a fin structure 60 as an air flow generation structural body is disposed between the housing 53 and the damper pulley 10. The fin structure 60 is attached to the hub 11 of the damper pulley 10 such that the fin structure is integrated with the boss 14 of the hub 11.

As shown in Figs. 3A and 3B, a sectional view taken along line Z-Z of Figs. 1A and 1B, the fin structure 60 includes a main body 61 having a thin-plate disc shape and a plurality of (six pieces in this case) blade portions 62 extending radially from an outer peripheral surface of the main body 61 to the outer periphery side. In a middle of the main body 61, a through-hole 61h is formed. The fin structure 60 is made of a resin, a gummy elastic member, or a metal by injection molding or cutting out. Examples of the gummy elastic member include synthetic rubber substances such as nitrile rubber (NBR), hydrogenated nitrile butadiene rubber (H-NBR), acrylic rubber (ACM), and fluororubber (FKM).

The main body 61 of the fin structure 60 has a width w along the axis x. The width w is narrower than a gap between a side end surface 12d of the pulley 12 on the oil side and an air-side surface 53a of the housing 53. In the main body 61, the through-hole 61h has an inside diameter φ1 equal to or slightly smaller than an outside diameter of the boss 14 of the hub 11, as well as an inner peripheral surface 61n. When the fin structure is attached, the inner peripheral surface 61n is integrated with and fixed to the outer peripheral surface 14b of the boss 14 by a tight fit.

The main body 61 has an air-side surface 61a that is a surface put into contact with the pulley 12 for the hub 11 and a housing-side surface 61b that is a surface facing the housing 53. When the inner peripheral surface 61n is integrated with and fixed to the outer peripheral surface 14b of the boss 14, the main body 61 is attached such that the air-side surface 61a is put into contact with the side end surface 12d of the pulley 12 on the oil side.

In the housing-side surface 61b of the main body 61, an annular recessed part 61d is formed in a vicinity of the through-hole 61h with the axis x set as a center. Specifically, the recessed part 61d is defined by an inclined surface 61ds of a tube and an annular side end surface 61dv that extends vertically to the inner peripheral surface 61n in the radial direction (the arrows cd direction) perpendicular to the axis x. A diameter of the tube gradually increases with a shift of a cross section of the tube toward the housing-side surface 61b along the axis x. The inclined surface 61ds is an annular surface that widens to the outer periphery side (in the arrow c direction) along with a shift of the cross section of the tube toward the housing 53 (in the arrow b direction) along the axis x. In this case, the inclined surface is a tapered surface of a substantially truncated cone.

The blade portions 62 are blades for air flow generation, each extending radially from an outer peripheral surface 61g of the main body 61 to the outer periphery side in plan view. The blade portions 62 each have a length in such a way as to reach an outer peripheral end of the pulley 12 for the hub 11 when the fin structure 60 is attached to the hub 11. The blade portions 62 each have a shape such that the blade portion extends from the outer peripheral surface 61g of the main body 61 to the outer periphery side and then a tip of the blade portion curves so as to slightly turn counterclockwise in plan view.

The blade portions 62 each have a blade face 62a that is formed both along a centrifugal direction (the radial direction) perpendicular to the axis x and parallel to a surface (not shown) along the axis x, causing the blade face 62a to generate a current of air flowing toward the outer periphery side (in the arrow d direction) when the main body 61 of the fin structure 60 rotates together with the crankshaft 51. A number of the blade portions 62 is six in this case but may be any number, other than the six, depending on any of a velocity, a quantity, and a wind pressure of an air current that a designer wishes to generate.

In this way, in the sealing structure 1, the fin structure 60 that is integrated with and fixed to the hub 11 is disposed between the hub 11 and the housing 53. In this state, of the main body 61 of the fin structure 60, the air-side surface 61a is put into contact with the side end surface 12d of the pulley 12 on the oil side, and the housing-side surface 61b is not put into contact with the housing 53 such that a predetermined gap is present between the housing-side surface 61b and the housing 53.

In the sealing structure 1, the inclined surface 61ds and the side end surface 61dv of the recessed part 61d formed in the main body 61 of the fin structure 60 and the outer peripheral surface 14b of the boss 14 define an annular pocket P1 centered about the axis x. The pocket P1 is a recessed part that is recessed from the housing-side surface 61b of the main body 61 of the fin structure 60 so as to have an annular recessed shape centered about the axis x. In other words, the pocket P1 is an annular recessed space that surrounds the outer peripheral surface 14b of the boss 14.

A diameter-increasing angle α that is an angle of the inclined surface 61ds, which forms a part of the pocket P1, relative to the axis x is an angle between the axis x (a straight line parallel to the axis x) and the inclined surface 61ds. The diameter-increasing angle α is an angle higher than 0° and preferably ranges from 4° to 18° inclusive. The diameter-increasing angle more preferably ranges from 5° to 16° inclusive and further preferably ranges from 7° to 15° inclusive.

The oil seal 20 is put between the housing 53 and the boss 14 of the hub 11. The side lip 29 of the oil seal 20 protrudes beyond the air-side surface 53a of the housing 53 to the air side (in the arrow a direction).

In this case, a distal end portion of the side lip 29 is disposed at a place that spatially overlaps the inclined surface 61ds of the recessed part 61d in the main body 61 in the radial direction (the arrows cd direction). In other words, the distal end portion of the side lip 29 is located slightly further to the air side (the arrow a direction side) than the housing-side surface 61b of the main body 61 of the fin structure 60 is, entering an internal space of the pocket P1 along the axis x and overlapping the pocket P1 in a direction perpendicular to the axis x.

The distal end portion of the side lip 29 and the inclined surface 61ds for the pocket P1 are not in contact with each other but form what is called a labyrinth seal. However, the scope of the present invention should not be limited to this example. The distal end portion of the side lip 29 may not enter the internal space of the pocket P1 and may not overlap the pocket P1 in a direction perpendicular to the axis x, with proviso that the distal end portion and the inclined surface are designed to form a labyrinth seal.

According to the configuration described above, in the sealing structure 1, the plurality of the blade portions 62 of the fin structure 60 each have the vertical blade face 62a that, in response to counterclockwise rotation of the hub 11, faces in a direction of the rotation around the axis x.

This configuration enables the sealing structure 1 to generate an air current V (see Fig. 2) of air flowing directly from the inner peripheral side (the arrow d direction side) toward the outer peripheral side (the arrow c direction side) in the centrifugal direction (the arrows cd direction) perpendicular to the axis x. This provides an increase in velocity, quantity, and wind pressure of the air current compared to conventional structures.

Since the plurality of the blade portions 62 simultaneously generates this air current V, the air current V of air flowing from the inner peripheral side (the arrow d direction side) toward the outer peripheral side (the arrow c direction side) is generated at an entire circumference of the boss 14, any place on the outer peripheral surface 14b of the boss 14 of the hub 11.

A distal end of each of the blade portions 62 reaches the end of the pulley 12 on the outer peripheral side (the arrow c direction side) and hence the air current V of air caused by the blade portions 62 acts as what is called an air curtain. This prevents the ingress of dust and other foreign matter into the gap between the hub 11 and the housing 53 beforehand.

Thus, action of the air current V of air as the air curtain averts the ingress of foreign matter that is about to intrude from the gap between the housing 53 and the hub 11 toward the oil seal 20 and thereby prevents the ingress of dust into the labyrinth seal, which is formed between the side lip 29 of the oil seal 20 and the pocket P1, ahead of time. This enables the damper pulley to provide improved dust resistance while being maintained in a low torque state.

The sealing structure 1 lets the plurality of the blade portions 62 generate the air current V of air and thereby prevents heat from building up between the housing 53 and the hub 11 beforehand. This obstructs the progress of rubber thermal curing of the damper elastic body 13, avoiding a deterioration in sealing property and durability.

The sealing structure 1 has construction by which the fin structure 60 can be detachably attached to the hub 11. This allows the sealing structure to be retrofitted with a fin structure 60 even if the sealing structure does not include the fin structure 60 in an initial stage and thus allows the sealing structure to improve dust resistance at a later time if the vehicle is put in a severe dust environment.

In the fin structure 60, the recessed part 61d is formed in advance to define a part of the pocket P1, which is designed to form the labyrinth seal together with the side lip 29 of the oil seal 20. This eliminates the need for forming the pocket P1 in the hub 11 by molding or processing beforehand and contributes to a substantial improvement in versatility.

In this way, in the sealing structure 1, the pocket P1 and the distal end portion of the side lip 29 form the labyrinth seal. Thus, even if foreign matter such as muddy water, sand and dust intrudes from the air side (the arrow a direction side) through the small window 16a in the disc 16 of the hub 11 in addition to the gap between the damper pulley 10 and the housing 53, the labyrinth seal formed by the side lip 29 and the pocket P1 can inhibit further ingress of foreign matter to the seal lip 24.

This can inhibit the seal lip 24 of the oil seal 20 from being exposed to foreign matter that intrudes from the damper pulley 10 as described above. Thus, the lip end portion 24a of the oil seal 20 avoids catching foreign matter and being damaged or deteriorated, and this prevents sealing performance of the oil seal 20 from decreasing and oil from leaking. The foreign matter intruding from the damper pulley 10 includes foreign matter intruding from the outside through the gap between the damper pulley 10 and the housing 53 and foreign matter intruding from the outside through any of the large windows 16b and the small windows 16a in the disc 16 of the hub 11.

As described above, the inclined surface 61ds for the pocket P1 that forms a part of the labyrinth seal has a shape such that the diameter of the tube increases at a rate of the diameter-increasing angle α along with a shift of the cross section of the tube toward the air side (in the arrow a direction). Hence, the labyrinth seal can inhibit further ingress of foreign matter to the seal lip 24 with increased effectiveness.

In the sealing structure 1, the fin structure 60 includes the blade portions 62 that each have a length in such a way as to extend beyond the small and large windows 16a and 16b and reach an outer peripheral side. This allows air to be readily brought in from the outside through the small and large windows 16a and 16b. This configuration provides an increase in velocity, quantity, and wind pressure of an air current Vx as compared to a case in which the small and large windows 16a and 16b are not formed. This contributes to improved sealing property and durability as compared to a case in which the small and large windows 16a and 16b are not formed.

### <Second embodiment

Thereafter, a second embodiment of the present invention will be described. A sealing structure in the second embodiment of the present invention shares a basic configuration with the sealing structure 1 according to the first embodiment. A difference in the sealing structure is only in that the fin structure 60 in the first embodiment is replaced with a fin structure 80 in the second embodiment. Thus, only the fin structure 80 will be described.

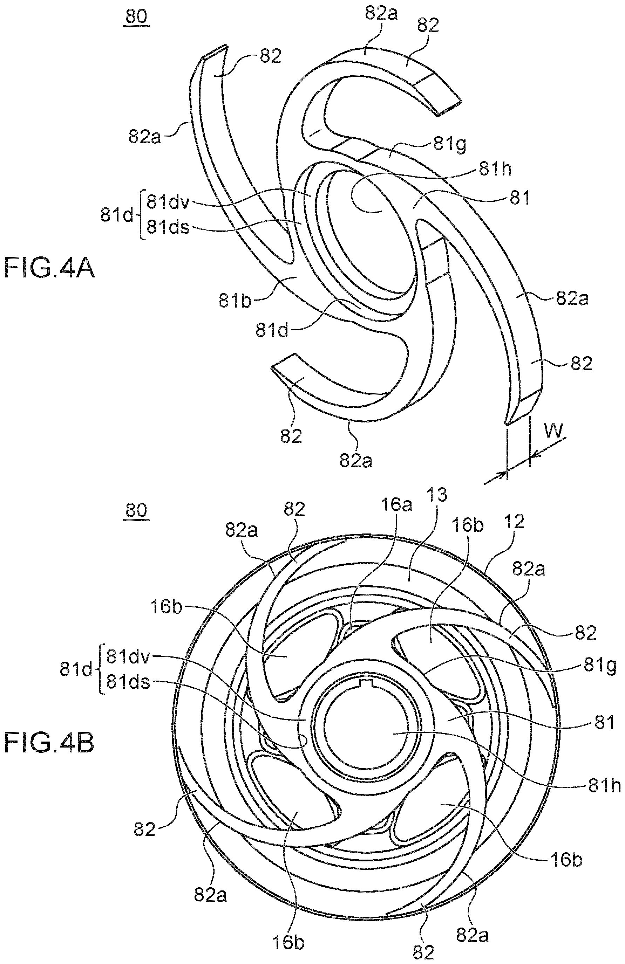

As shown in Figs. 4A and 4B, in a similar way to the first embodiment, the fin structure 80 is disposed between a housing 53 and a damper pulley 10 and is attached to a hub 11 of the damper pulley 10 such that the fin structure is integrated with a boss 14 of the hub 11.

The fin structure 80 includes a main body 81 having a thin-plate disc shape and a plurality of (four pieces in this case) blade portions 82 extending radially from an outer peripheral surface 81g of the main body 81 to the outer periphery side. In a middle of the main body 81, a through-hole 81h is formed. The fin structure 80, in a similar way to the fin structure 60, is made of a resin, a gummy elastic member, or a metal by injection molding or cutting out.

The main body 81 of the fin structure 80 has a width w along the axis x. The width w is narrower than a gap between a side end surface 12d of a pulley 12 on the oil side and an air-side surface 53a of the housing 53. In the main body 81, the through-hole 81h has an inside diameter φ1 equal to or slightly smaller than an outside diameter of the boss 14 of the hub 11, as well as an inner peripheral surface 81n. When the fin structure is attached, the inner peripheral surface 81n is integrated with and fixed to an outer peripheral surface 14b of the boss 14 by a tight fit.

The main body 81 has an air-side surface 81a that is a surface put into contact with the pulley 12 for the hub 11 and a housing-side surface 81b that is a surface facing the housing 53. When the inner peripheral surface 81n is integrated with and fixed to the outer peripheral surface 14b of the boss 14, the main body 81 is attached such that the housing-side surface 81b is put into contact with the side end surface 12d of the pulley 12 on the oil side.

In the housing-side surface 81b of the main body 81, an annular recessed part 81d is formed in a vicinity of the through-hole 81h with the axis x set as a center. The recessed part 81d, which has a configuration similar to that of the recessed part 61d of the fin structure 60 in the first embodiment, is defined by an inclined surface 81ds of a tube and an annular side end surface 81dv that extends to the inner peripheral surface 81n in a direction perpendicular to the axis x. A diameter of the tube gradually increases with a shift of a cross section of the tube toward the housing-side surface 81b along the axis x. In other words, the inclined surface 81ds is a tapered surface of a substantially truncated cone that widens to the outer periphery side (in the arrow c direction) along with a shift of a cross section of the truncated cone toward the housing 53 (in the arrow b direction) along the axis x.

The blade portions 82 are blades extending radially and in a curved form from the outer peripheral surface 81g of the main body 81 to the outer periphery side (in the arrow c direction) in plan view. The blade portions 82 each have a length in such a way as to reach a place that faces a through-hole of a large window 16b formed at a rim 15 of the hub 11 when the fin structure 80 is attached to the hub 11. In other words, the blade portions 82 each have a length in such a way as to reach an outer peripheral end of the pulley 12 for the hub 11.

The blade portions 82 have a swirl shape such that the blade portion extends from the outer peripheral surface 81g of the main body 81 clockwise to the outer periphery side (the arrow c direction side) in the form of an arc-shaped smooth curve in plan view.

The blade portions 82 each have a blade face 82a that is formed both along a centrifugal direction (the radial direction) perpendicular to the axis x and parallel to a surface (not shown) along the axis x, causing the blade face 82a to generate a current of air flowing toward the outer periphery side when the main body 81 of the fin structure 80 rotates counterclockwise together with a crankshaft 51. A number of the blade portions 82 is four in this case but may be any number, other than the four, depending on any of a velocity, a quantity, and a wind pressure of an air current that a designer wishes to generate.

In a similar way to the first embodiment, the sealing structure that includes the fin structure 80 having such a configuration is able to generate an air current V (Fig. 2) of air flowing directly from the inner peripheral side (the arrow d direction side) toward the outer peripheral side (the arrow c direction side) in the radial direction (the arrows cd direction) perpendicular to the axis x. This provides an increase in velocity, quantity, and wind pressure of the air current compared to conventional structures.

Since effects produced by the sealing structure and the fin structure 80 in the second embodiment are similar to those in the first embodiment, a description thereof is omitted herein.

### <Third embodiment

Next, a third embodiment of the present invention will be described. A sealing structure in the third embodiment of the present invention shares a basic configuration with the sealing structure 1 according to the first embodiment. A difference in the sealing structure is only in that the fin structure 60 in the first embodiment is replaced with a fin structure 100 in the third embodiment. Thus, only the fin structure 100 will be described.

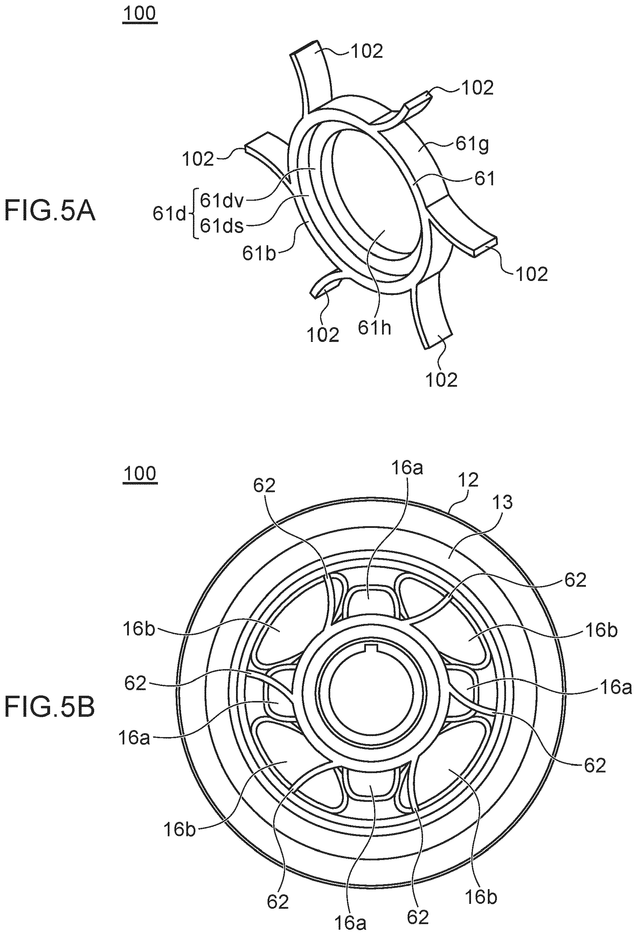

As shown in Figs. 5A and 5B in which parts corresponding to those in Figs. 3A and 3B are assigned with the same reference numerals, the fin structure 100, in a similar way to the first embodiment, is disposed between a housing 53 and a damper pulley 10 and is attached to a hub 11 of the damper pulley 10 such that the fin structure is integrated with a boss 14 of the hub 11.

The fin structure 100 includes a main body 61 having a thin-plate disc shape and a plurality of (six pieces in this case) blade portions 102 extending radially from an outer peripheral surface 61g of the main body 61 to the outer periphery side (in the arrow c direction). In a middle of the main body 61, a through-hole 61h is formed. The fin structure 100, in a similar way to the fin structure 60, is made of a resin, a gummy elastic member, or a metal by injection molding or cutting out.

The fin structure 100 has the main body 61 of the fin structure 60 according to the first embodiment and includes an air-side surface 61a, a housing-side surface 61b, and a recessed part 61d. The fin structure 100 includes the plurality of the blade portions 102 extending radially from the outer peripheral surface 61g of the main body 61 to the outer periphery side (in the arrow c direction) in plan view.

The blade portions 102 are blades that are similar in basic shape to the blade portions 62 of the fin structure 60 of the first embodiment but are shorter in length. A length of the blade portion 102 from the outer peripheral surface 61g to a distal end portion is less than or equal to half the length of the blade portion 62. When the fin structure 100 is attached to the hub 11, the blade portions 102 are disposed so as to face large windows 16b and small windows 16a in a disc 16. However, the distal end portion of the blade portion 102 does not reach places that face a rim 15, a damper elastic body 13, and a pulley 12.

In a similar way to the first embodiment, the sealing structure that includes the fin structure 100 having such a configuration is able to generate an air current V of air flowing directly from the inner peripheral side (the arrow d direction side) toward the outer peripheral side (the arrow c direction side) in the radial direction (the arrows cd direction) perpendicular to the axis x. This provides an increase in velocity, quantity, and wind pressure of the air current compared to conventional structures.

Since effects produced by the sealing structure and the fin structure 100 in the third embodiment are similar to those in the first embodiment, a description thereof is omitted herein. However, the blade portions 102 of the fin structure 100 are shorter in length than the blade portions 62 of the fin structure 60 and thus do not generate an air current that is greater in velocity, quantity, and wind pressure than that in the first embodiment.

### <Fourth embodiment

Next, a fourth embodiment of the present invention will be described. A sealing structure in the fourth embodiment of the present invention shares a basic configuration with the sealing structure 1 according to the first embodiment. A difference in the sealing structure is only in that the fin structure 80 in the second embodiment is replaced with a fin structure 120 in the fourth embodiment. Thus, only the fin structure 120 will be described.

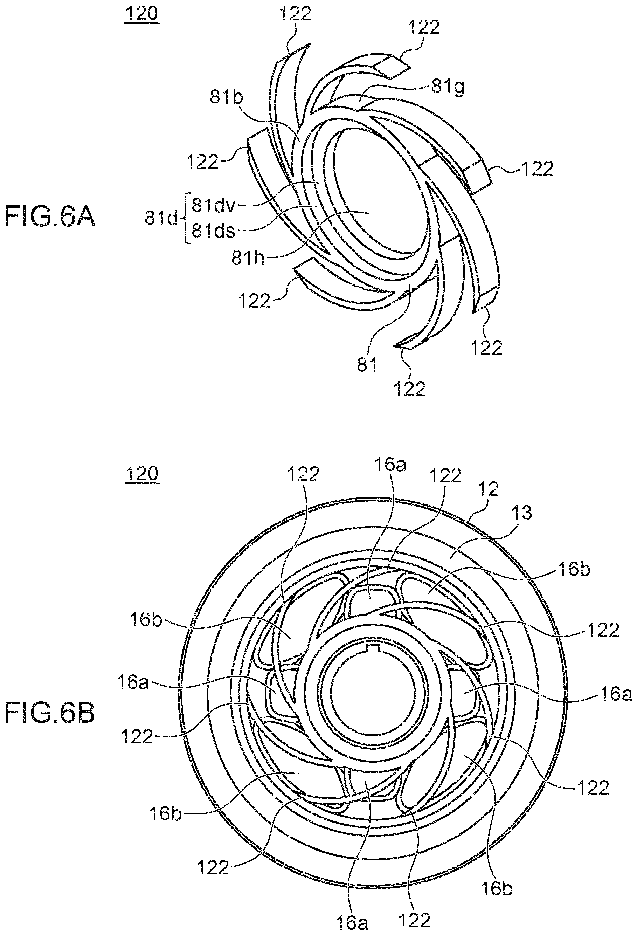

As shown in Figs. 6A and 6B in which parts corresponding to those in Figs. 4A and 4B are assigned with the same reference numerals, the fin structure 120, in a similar way to the first embodiment, is disposed between a housing 53 and a damper pulley 10 and is attached to a hub 11 of the damper pulley 10 such that the fin structure is integrated with a boss 14 of the hub 11.

The fin structure 120 includes a main body 81 having a thin-plate disc shape and a plurality of (six pieces in this case) blade portions 122 extending radially from an outer peripheral surface of the main body 81 to the outer periphery side. In a middle of the main body 81, a through-hole 81h is formed. The fin structure 120, in a similar way to the fin structure 80, is made of a resin, a gummy elastic member, or a metal by injection molding or cutting out.

The fin structure 120 has the main body 81 of the fin structure 80 according to the second embodiment and includes an air-side surface 81a, a housing-side surface 81b, and a recessed part 81d. The fin structure 120 includes the plurality of the blade portions 122 extending radially from an outer peripheral surface 81g of the main body 81 to the outer periphery side (in the arrow c direction) in plan view.

The blade portions 122 are blades that are similar in basic shape to the blade portions 82 of the fin structure 80 of the second embodiment but are shorter in length. A length of the blade portion 122 from the outer peripheral surface 81g to a distal end portion is less than or equal to half the length of the blade portion 82. When the fin structure 120 is attached to the hub 11, the blade portions 122 are disposed so as to face large windows 16b and small windows 16a in a disc 16. However, the distal end portion of the blade portion 122 does not reach places that face a rim 15, a damper elastic body 13, and a pulley 12.

In a similar way to the second embodiment, the sealing structure that includes the fin structure 120 having such a configuration is able to generate an air current V of air flowing directly from the inner peripheral side (the arrow d direction side) toward the outer peripheral side (the arrow c direction side) in the radial direction (the arrows cd direction) perpendicular to the axis x. This provides an increase in velocity, quantity, and wind pressure of the air current compared to conventional structures.

Since effects produced by the sealing structure and the fin structure 120 in the fourth embodiment are similar to those in the first embodiment, a description thereof is omitted herein. However, the blade portions 122 of the fin structure 120 are shorter in length than the blade portions 82 of the fin structure 80 and thus do not generate an air current that is greater in velocity, quantity, and wind pressure than that in the second embodiment.

### <Wind velocity experiment for fin structures according to first to fourth embodiments>

A sealing structure 1, as shown in Fig. 2, includes an anemometer 70 at an arbitrary place that is on an outer periphery side (an arrow c direction side) of a fin structure 60 and that faces the fin structure 60. Velocity of an air current V of air generated by the fin structure 60 was measured using the anemometer 70. The anemometer 70 used in this experiment may be a meter such as an ultrasonic anemometer or a hot-wire anemometer.

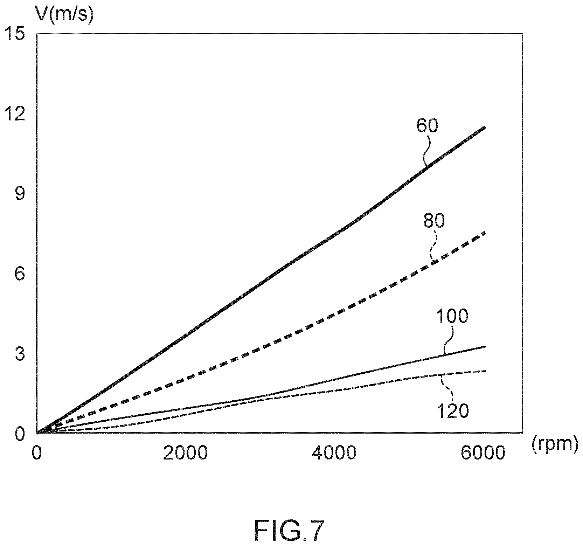

Fig. 7 shows results of wind velocities (m/s), i.e., changes in velocity of the air current V measured about the fin structure 60 of the first embodiment, the fin structure 80 of the second embodiment, the fin structure 100 of the third embodiment, and the fin structure 120 of the fourth embodiment in relation to revolutions per minute (rpm). The wind velocities (m/s) were measured, with distance from the axis x to the outer peripheral surface of the pulley 12 for the hub 11 being set to 75 mm and distance from the axis x to the anemometer 70 being set to 150 mm.

In this case, the experiment proved that the wind velocity of the air current V generated by the fin structure 60 of the first embodiment is highest, followed by the wind velocities of the fin structures 80, 100, and 120 of the second, third, and fourth embodiments in this order.

### (Other embodiments)

The first to the fourth embodiments of the present invention have been described above. However, the scope of the present invention should not be limited to the first to the fourth embodiments but should include all modifications that are within the technical idea of the present invention and the spirit of the appended claims. The configurations may be selectively combined as appropriate to achieve at least part of the challenge and effects described above. For instance, the shapes, materials, dispositions, sizes, and other properties of the components in the first to the fourth embodiments may be appropriately changed depending on a specific usage aspect of the present invention.

For instance, a sealing structure including an annular pocket and a sealing device according to the present invention is not limited to a sealing structure including a torsional damper and an oil seal, which is applied to between the damper pulley 10 acting as a torsional damper and the oil seal 20 described above, but may be a sealing structure applied to between a shaft member or a rotating functional member and a sealing device used for any of the members. For instance, the sealing structure including the annular pocket and the sealing device according to the present invention may be applied to a component such as a rear end of an engine, a hub bearing for holding a wheel, and a differential device.

If the sealing structure including the annular pocket and the sealing device according to the present invention is applied to the rear end of the engine, an oil seal that is disposed at a rear end of a crankshaft and that is used to seal a gap between a case and the crankshaft is a sealing device and a flywheel is a functional member.

If the sealing structure including the annular pocket and the sealing device according to the present invention is applied to the differential device, a seal used to seal a gap between a housing and an output shaft is a sealing device and the output shaft is a shaft member.

The damper pulley 10 and the oil seal 20 may have another configuration with proviso that the sealing structure includes a pocket P1 and a side lip 29 that form a labyrinth seal as described above.

In the damper pulley 10 according to any of the first to the fourth embodiments, the small and large windows 16a and 16b, which are each made up of a through-hole passing through the disc 16 from the internal side (the arrow b direction side) to the external side (the arrow a direction side), are formed. However, the present invention is not limited to this example. The present invention can also be applied to a configuration in which only any one of the small and large windows 16a and 16b is formed and a configuration in which both the small and large windows 16a and 16b are not formed.

In the fin structures 60, 80, 100, and 120 according to the first to the fourth embodiments described above, the blade portions 62, 82, 102, and 122 have the vertical blade faces 62a, 82a, 102a, and 122a that are each formed both along the centrifugal direction (the radial direction) perpendicular to the axis x and parallel to a surface (not shown) along the axis x and that each face in a direction of the rotation around the axis x. However, the present invention is not limited to this example. Any of the blade portions 62, 82, 102, and 122 may at least partly have vertical blade faces that are each formed both along the centrifugal direction (the radial direction) perpendicular to the axis x and parallel to a surface (not shown) along the axis x and that each face in a direction of the rotation around the axis x.

The sealing structure 1 including the damper pulley 10 and the oil seal 20 according to any of the first to the fourth embodiments is applied to an engine in an automobile. However, the engine in the automobile is not the only component to which the sealing structure 1 according to the present invention is applied. The present invention may be applied to all components that can make use of effects produced by the present invention, such as a rotating shaft of equipment including other vehicles, general-purpose machinery, and industrial machinery.

### List of Reference Signs

- 1: sealing structure,
- 10: damper pulley (torsional damper),
- 11: hub (disc-shaped member),
- 12: pulley (mass body),
- 12a: inner peripheral surface,
- 12b: outer peripheral surface,
- 12c: v-shaped groove,
- 13: damper elastic body,
- 14: boss (shaft member)
- 14a: through-hole,
- 14b: outer peripheral surface,
- 14c: inner peripheral surface,
- 15: rim,
- 16: disc,
- 16a: small window,
- 16b: large window,
- 20: oil seal (sealing device),
- 21: reinforcing ring,
- 21a: disc,
- 21b: cylindrical portion,
- 22: elastic body part,
- 23: lip waist part,
- 24: seal lip,
- 24a: lip end portion,
- 25: dust lip,
- 26: garter spring,
- 27: outer cover,
- 28: gasket,
- 29: side lip,
- P1: pocket,
- 51: crankshaft (rotating shaft),
- 52: bolt,
- 53: housing (attachment target),
- 53h: through-hole,
- 60,80,100,120: fin structure,
- 61,81: main body,
- 61d,81d: recessed part,
- 61h,81 h: through-hole,
- 61ds,81ds: inclined surface,
- 62,82,102,122: blade portion
- 62a,82a: blade face,
- x: axis,
- α: diameter-increasing angle,
- V: air current

## Claims

1. An air flow generation structural body comprising:
a main body disposed in a gap between an attachment target to which a sealing device is attached and a disc-shaped member that is integrated with a shaft member in such a way as to extend from the shaft member toward an outer periphery side, the shaft member passing through a through-hole in the attachment target and being rotatable around an axis, the main body being attached to the shaft member in such a way as to be rotatable together with the shaft member; and
a plurality of blade portions formed on an outer peripheral surface of the main body to generate an air current, at least part of each of the blade portions extending along a centrifugal direction perpendicular to the axis and being parallel to the axis.

2. The air flow generation structural body according to claim 1, wherein the blade portions each have a length in such a way as to reach an end of the disc-shaped member on the outer periphery side.

3. The air flow generation structural body according to claim 1, wherein the blade portions each have a length in such a way as to reach a place that faces a through-hole of a window formed in the disc-shaped member.

4. The air flow generation structural body according to any one of claims 1 to 3, comprising a recessed part that is annular in shape and that is formed in a sealing-side surface facing the attachment target,
wherein a side lip of the sealing device extends to the recessed part such that an annular space is formed between the side lip and an outer peripheral surface of the air flow generation structural body forming the recessed part.

5. A sealing structure comprising:
a sealing device;
an attachment target to which the sealing device is attached;
a shaft member passing through a through-hole in the attachment target and being rotatable around an axis;
a disc-shaped member integrated with the shaft member in such a way as to extend from the shaft member toward an outer periphery side; and
an air flow generation structural body comprising:
a main body in a gap between the attachment target and the disc-shaped member, the main body being attached to the shaft member in such a way as to be rotatable together with the shaft member and being attached to the shaft member in such a way as to be rotatable together with the shaft member; and
a plurality of blade portions formed on an outer peripheral surface of the main body to generate an air current, at least part of each of the blade portions extending along a centrifugal direction perpendicular to the axis and being parallel to the axis, wherein the air flow generation structural body generates an air current flowing in the centrifugal direction perpendicular to the axis in response to rotation of the shaft member.

## Amended claims

### Amended claims under Art. 19.1 PCT

1. (Amended) An air flow generation structural body comprising:
a main body disposed in a gap between an attachment target to which a sealing device is attached and a disc-shaped member that is integrated with a shaft member in such a way as to extend from the shaft member toward an outer periphery side, the shaft member passing through a through-hole in the attachment target and being rotatable around an axis, the main body being attached to the shaft member in such a way as to be rotatable together with the shaft member; and
a plurality of blade portions formed on an outer peripheral surface of the main body to generate an air current, at least part of each of the blade portions extending along a centrifugal direction perpendicular to the axis and being parallel to the axis, wherein
the blade portions each have a length in such a way as to reach a place that faces a through-hole of a window formed in the disc-shaped member.

2. The air flow generation structural body according to claim 1, wherein the blade portions each have a length in such a way as to reach an end of the disc-shaped member on the outer periphery side.

3. (Canceled)

4. (Amended) The air flow generation structural body according to claims 1 te-3 or 2, comprising a recessed part that is annular in shape and that is formed in a sealing-side surface facing the attachment target, wherein a side lip of the sealing device extends to the recessed part such that an annular space is formed between the side lip and an outer peripheral surface of the air flow generation structural body forming the recessed part.

5. (Amended) A sealing structure comprising:
a sealing device;
an attachment target to which the sealing device is attached;
a shaft member passing through a through-hole in the attachment target and being rotatable around an axis;
a disc-shaped member integrated with the shaft member in such a way as to extend from the shaft member toward an outer periphery side; and
an air flow generation structural body comprising:
a main body in a gap between the attachment target and the disc-shaped member, the main body being attached to the shaft member in such a way as to be rotatable together with the shaft member and being attached to the shaft member in such a way as to be rotatable together with the shaft member; and
a plurality of blade portions formed on an outer peripheral surface of the main body to generate an air current, at least part of each of the blade portions extending along a centrifugal direction perpendicular to the axis and being parallel to the axis, wherein the air flow generation structural body generates an air current flowing in the centrifugal direction perpendicular to the axis in response to rotation of the shaft member, wherein
the blade portions each have a length in such a way as to reach a place that faces a through-hole of a window formed in the disc-shaped member.
